(19) Europäisches Patentamt
European Patent Office
Office européen des brevets

(11) **EP 2 437 549 B1**

(12) **EUROPEAN PATENT SPECIFICATION**

(45) Date of publication and mention
of the grant of the patent:
**30.08.2017 Bulletin 2017/35**

(51) Int Cl.:
*H04L 29/06* (2006.01)          *H04W 36/32* (2009.01)
*H04W 36/02* (2009.01)

(21) Application number: **11183168.1**

(22) Date of filing: **28.09.2011**

(54) **METHOD FOR MANAGING RADIO RESOURCES IN A CELLULAR RADIO COMMUNICATION NETWORK INFRASTRUCTURE**

Verfahren zur Verwaltung von Funk-Ressourcen in einer Mobilfunk-Kommunikationnetzwerkinfrastruktur

MÉTHODE DE GESTION DES RESSOURCES RADIO DANS UNE INFRASTRUCTURE RÉSEAU DE COMMUNICATION RADIO CELLULAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2010 FR 1057853**

(43) Date of publication of application:
**04.04.2012 Bulletin 2012/14**

(73) Proprietor: **ALCATEL LUCENT**
**92100 Boulogne-Billancourt (FR)**

(72) Inventors:
• **Feki, Afef**
**91620 Nozay (TN)**
• **Sayadi, Bessem**
**91620 Nozay (TN)**

(74) Representative: **Berthier, Karine**
**Alcatel-Lucent International**
**148/152, route de la Reine**
**92100 Boulogne-Billancourt (FR)**

(56) References cited:
EP-A1- 1 047 275          EP-A1- 1 549 096
EP-A1- 1 775 986          WO-A2-2004/062122
US-A1- 2005 026 619       US-A1- 2008 016 213
US-B1- 6 385 454

## Description

One aspect of the invention relates to a method for dynamically adjusting the service zone of a cellular mobile telecommunications network, with data being delivered in streaming mode to a mobile radio communication terminal by the base station whose radio coverage comprises the cell in which the mobile radio communication terminal is located. Such a method is particularly applicable, though not exclusively so, to the transmission of video streams in cellular telecommunications networks, such as fourth-generation LTE (Long Term Evolution) or WiMAX (Worldwide Interoperability for Microwave Access) telecommunications networks, and more particularly for cellular coverage wherein such networks have small-sized cells.

Mobile telecommunication networks offer increasingly advanced services to users of mobile telecommunication devices. These services require the transmission of large quantities of data and use large bandwidths. For example, streaming video data transmission services are in heavy demand. However, the users of these telecommunications networks expect excellent quality of service combined with the most reasonable possible cost. In order to meet these requirements, telecommunications networks that have a so-called small-cell topology, meaning one in which the cells have a radius less than that of currently existing cells, are being developed. Current cells have a radius that varies from 400 meters to 1 km. Small cells have a radius of less than 400 meters, for example on the order of 100 to 200 meters.

However, ensuring video streaming to a user of a mobile radio communication terminal located within a small cell poses problems, particularly when the user is moving.

This is because, first of all, a video streaming delivery service requires:

- the continuity of a telecommunication session combined with the service, in the continuous feeding of video data to the buffer memory of the mobile radio communication terminal,

- a delivery of the streaming video in the form of packets or segments with short durations (with the packet representing an image or part of an image, and a segment representing a video duration lasting on the order of two seconds, for example),

- good video quality, meaning that a fluid video is displayed on the mobile radio communication terminal's screen, avoiding frozen images which may be caused by an incorrect feed to the mobile radio communication terminal's video decoder, or the loss of packets of segments, and

- a streaming video transfer rate having a guaranteed minimum regardless of the conditions of the mobile telecommunication network, meaning regardless of the signal/noise ratio within the mobile radio communication terminal, the time taken to provide the packets or segments, and the load of the mobile telecommunication network.

Secondly, the user of the mobile radio communication terminal may move within the mobile telecommunication network, and therefore from one cell to another, at a speed that may vary from a speed of zero (as in a static or nearly static position) to a fast speed (as when traveling in a vehicle or train), or a medium speed in between (as when traveling on foot).

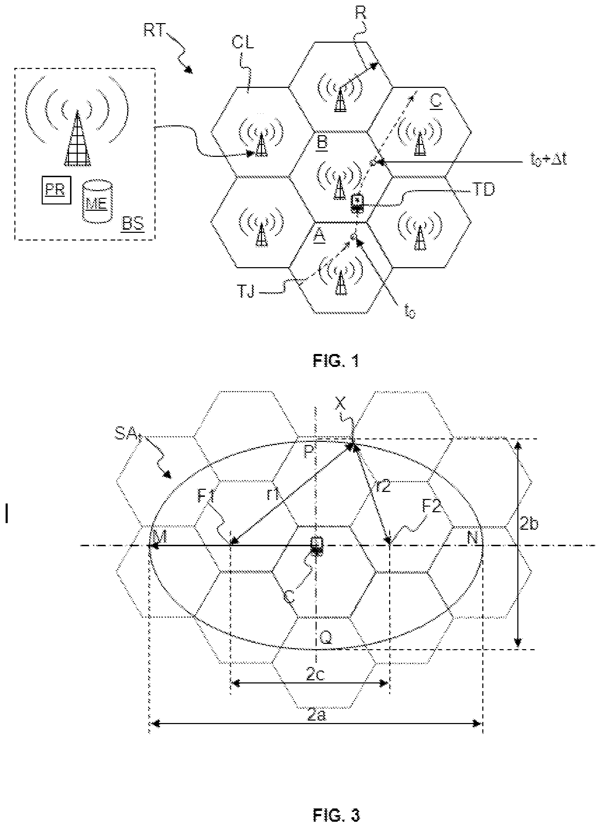

Figure 1 schematically depicts a radio coverage portion of a mobile telecommunication network RT, the illustrated portion comprising small cells CL (in that each small cell has a radius R on the order of 100 to 200 m, for example). Each cell has its own base station BS. Typically, a base station BS comprises a processing module, for example a processor PR and a memory ME. Moving a mobile radio communication terminal TD from one cell to another, for example from cell A to cell B and then to cell C along a trajectory TJ, leads to a telecommunication session handover process. The session is successively transferred from the base station of the original cell where the mobile radio communication terminal TD is located at a moment $t_0$ the base station of the destination cell where the mobile radio communication terminal TD is located at a moment $t_0+\Delta t$. Naturally, the combination of small cells CL and a fast-traveling mobile radio communication terminal TD leads to frequent session handovers between cells. This significantly increases the operational signaling load related to the handover between cells, and increases the likelihood of failure during handovers. In addition, one may cite the weak responsiveness of the scheduling algorithms currently used to respond to training video requests by mobile radio communication terminals moving quickly within a cellular mobile telecommunication network in which at least some of the cells are small-sized.

Cellular radio communication systems are known in which the base station of the cell in which the mobile radio communication terminal is located distribute the data to all the base stations of neighboring cells. This solution reaches its limits in the case of a cell with a radius less than 400 m and a mobile radio communication terminal moving at a speed of 100 km/h, with a handover between cells taking place every 4 seconds, which is a very short time for transferring the data packets between the cells' base stations, then transmitting them to the mobile radio communication terminal. Furthermore, this solution needlessly causes resources to be allocated by the base stations within the cells in which the mobile radio communication terminal will not be located. Another example can be found in document WO2004/062122.

One purpose of the invention is to propose a method for dynamically adjusting a service area of a mobile communication network that remedies at least one of the shortcomings of the prior art.

According to a first aspect, a method is proposed for managing radio resources in a cellular radio communication network infrastructure comprising a plurality of base stations serving cells, at least some of the base stations being capable of transmitting streaming data to mobile radio communication terminals on sets of cells, known as service areas, which method comprises the following steps, in relation to a mobile radio communication terminal to which the streaming data are transmitted by the base station(s) serving the service area within whose coverage the terminal is located:

- estimating a movement parameter of the mobile radio communication terminal,
- adjusting the service area as a function of the estimate of the movement parameter of the mobile radio communication terminal,
- identifying cells of the service area within which the mobile radio communication terminal might most likely be located, and
- transmitting data not yet transmitted to the mobile radio communication terminal, to the base stations serving the identified cells.

The method may further comprise a step of preloading data received by at least some of the base stations serving the identified cells.

The method may further comprise a step of deleting the preloaded data from at least some of the base stations serving the identified cells, after a predefined period of time.

The step of estimating the mobile radio communication terminal's movement parameters may comprise estimating a speed and direction of the mobile radio communication terminal's movement based on GPS satellite positioning or a measurement of the TDOA time difference of arrival, or a measurement of received power taken by a base station serving the cell in which the mobile radio communication terminal is located.

The step of estimating the mobile radio communication terminal's movement parameters may comprise estimating a variance of an estimate of a trajectory of the mobile radio communication terminal, and adjusting the service area as a function of said variance.

The step of estimating the mobile radio communication terminal's movement parameters may comprise determining the probability of knowing the mobile radio communication terminal's trajectory, defined as being inversely proportionate to the variance, and comparing it to a probability threshold, with the service area being reduced if the probability is greater than the probability threshold.

The service area may correspond to a radio coverage having a substantially elliptical shape.

A center of the ellipse may be defined by the intersection of a long axis and a small axis of the ellipse, with the intersection corresponding to the position of the mobile radio communication terminal.

The length of the long and short axes of the ellipse may be dynamically adapted to, respectively, the speed and variance of the estimate of the mobile radio communication terminal's trajectory.

According to another aspect, a computer program product is proposed which is intended to be loaded in a memory of a radio resource management device of a cellular radio communication network infrastructure, the computer program product comprising portions of software code implementing the method of managing the radio resources in a cellular radio communication network infrastructure whenever the program is run by a processing module of the radio resource management device.

According to yet another aspect, a radio resource management device for a cellular radio communication network infrastructure is proposed, said infrastructure comprising a plurality of base stations serving cells, at least some of the base stations being capable of transmitting streaming data to mobile radio communication terminals in sets of cells, known as service areas, the device comprising a processing module for implementing the following steps, in relation to a mobile radio communication terminal to which the streaming data are transmitted by the base station(s) serving the service area within whose coverage the terminal is located:

- estimating a movement parameter of the mobile radio communication terminal,

- adjusting the service area as a function of the estimate of the movement parameter of the mobile radio communication terminal,

- identifying cells of the service area within which the mobile radio communication terminal might most likely be located, and

- transmitting data not yet transmitted to the radio communication terminal, to the base stations serving the identified cells.

According to yet another aspect, a base station is proposed comprising the radio resource management device.

According to yet another aspect, a network controller RNC for a third-generation 3G cellular radio communication network infrastructure is proposed, comprising the radio resource management device.

According to yet another aspect, a MME/SGW gateway for a fourth-generation LTE or WiMax cellular radio communication network infrastructure is proposed, comprising the radio resource management device.

The invention therefore makes it possible to reduce the failure rate during telecommunication session handover processes between cells, to reduce interruptions in streaming data transmission, and to avoid degrading the quality of the transmitted data. Due to the distribution of the data by preloading, within the base stations, different cells of the service area dynamically defined in relation to the trajectory of the mobile radio communication terminal, it is possible to ensure a continuity of streaming data transmission service, even to users of mobile radio communication terminals that are moving very quickly. The invention makes it possible to dynamically select the potential cells in which the mobile radio communication terminal could be located at a later moment, take into consideration the current location of the mobile radio communication terminal and its change over time.

Other advantages will become apparent from the detailed description of the invention that follows.

The present invention is illustrated by the non-exhaustive examples in the attached Figures, in which identical references indicate similar elements.

- Figure 1 schematically depicts a radio coverage portion of a cellular mobile telecommunication network comprising small cells;

- Figure 2 is a block diagram illustrating one embodiment of the method for dynamically adjusting a service area of the mobile telecommunication network;

- Figure 3 depict a service area in the shape of an ellipse;

- Figure 4 is a temporal diagram illustrating the transmission of data between the various base stations and the mobile radio communication terminal;

- Figure 5 schematically depicts an example adjustment of a service area in a mobile radio communication terminal moving at a slow speed;

- Figure 6 schematically depicts an example adjustment of a service area in a mobile radio communication terminal moving at a fast speed;

- Figures 7 to 9 schematically depict the dynamic adjustment of a service area for mobile radio communication terminal that is moving; and

- Figure 10 schematically depicts the variance of the mobile radio communication terminal's trajectory.

In what follows, a "streaming video service" refers to the transmission, from a base station to a mobile radio communication terminal, of a series of images succeeding one another over time and forming a video in the form of packets or segments. Additionally, a "service area" refers to a set of cells where a mobile radio communication terminal has a higher future probability of being located, with the service area being defined only in relationship to the video stream transmitted to the mobile radio communication terminal.

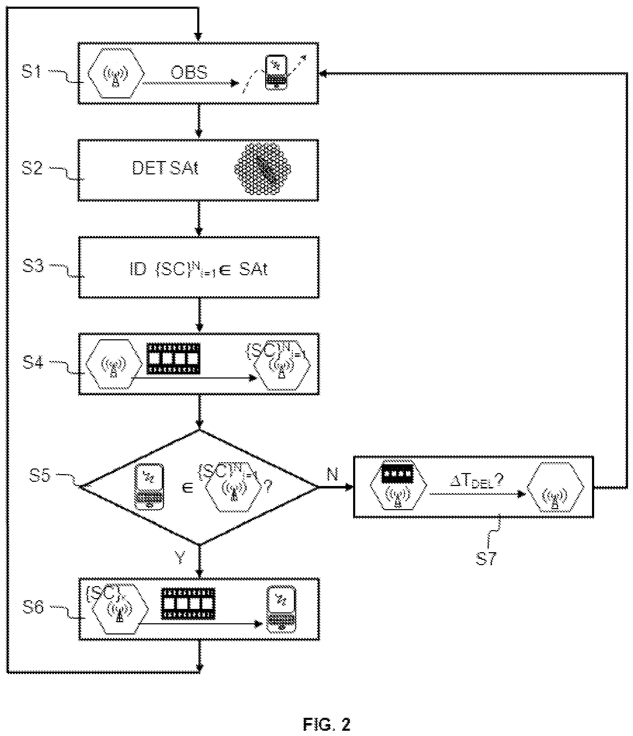

Figure 2 is a block diagram illustrating one embodiment of the method for dynamically adjusting a service area of the mobile telecommunication network.

The base station BS (see Figure 1) or a network controller (RNC for "Radio Network Controller" in a 3G network) or a gateway (MME/SGW for "Mobility Management Entity/ Serving Gateway" in an LTE network), forming a radio resource management device of a cellular radio communication network infrastructure, implements the method for dynamically adjusting a service area of a mobile telecommunication network that will be described. For example, a computer program product loaded in the memory ME of the base station BS covering the cells in which the mobile radio communication terminal is located, comprises portions of software code that implement the to-be-described method of dynamic adjustment whenever the program is executed by the processing module, for example the processor PR of the base station BS.

In a step S1, the mobile radio communication terminal's movement parameters are estimated. The estimate of the mobile radio communication terminal's movement parameters may consist of estimating a trajectory and speed of the mobile radio communication terminal. By way of example, the speed and direction of the mobile radio communication terminal's movement may be estimated by GPS satellite positioning as mentioned in the document "Incorporating GPS into Wireless Networks: Issues and Challenges", S. Omar, C. Rizos, The 6th International Symposium on Satellite Navigation Technology Including Mobile Positioning & Location Services, 2003. Alternatively, they may be estimated by measuring the time difference of arrival TDOA, as mentioned in the document "Positioning using time-difference of arrival measurements", Fredrik Gustafsson, Fredrik Gunnarsson, IEEE International Conference on Acoustics, Speech, and Signal Processing, 2003, ICASSP '03. It is also possible to classify the mobile radio communication terminal's speed of movement along three speed levels, for example a slow speed corresponding to a stationary or near-stationary mobile radio communication terminal, a medium speed corresponding to a mobile radio communication terminal moving at the speed of a user walking on foot, or a fast speed corresponding to a mobile radio communication terminal moving at the speed of an automobile. Such a classification may be based on power measurements emitted by the mobile radio communication terminal and received by the base station, as mentioned in the document "Wavelet analysis for velocity characterization in mobile networks", Salah-Eddine Elayoubi, Afef Ben Hadj Alaya-Feki, Emmanuelle Villebrun, Benoît Fourestié, VTC Spring 2006, pages 793-797. This estimate is carried out by the base station of the cell in which the mobile radio communication terminal is located at a moment t. It may be performed periodically.

The estimating of the trajectory may consist of determining a direction vector $A_{i,t-1}A_{i,t}$ in which $A_{i,t}$ is the current position of the mobile radio communication terminal i at the moment $t$, and $A_{i,t-1}$ is the previous position of the mobile radio communication terminal i at the moment $t-1$.

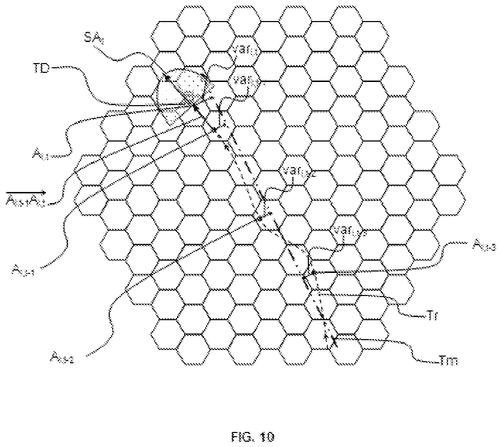

Furthermore, a variance $var_{i,t}$ of the estimate of the mobile radio communication terminal's trajectory, known as i at the moment $t$, may be taken into account. Figure 10 schematically depicts the variance $var_{i,t-3}$, $var_{i,t-2}$, $var_{i,t-1}$, $var_{i,t}$ in the estimate of the mobile radio communication terminal's trajectory for different successive positions $A_{i,t-3}$, $A_{i,t-2}$, $A_{i,t-1}$, $A_{i,t}$ of the mobile radio communication terminal TD. The variance $var_{i,t}$ is calculated as the square of the difference between the current position $A_{i,t-3}$, $A_{i,t-2}$, $A_{i,t-1}$, $A_{i,t}$ of an actual trajectory Tr of the mobile radio communication terminal TD and a medium trajectory Tm. The medium trajectory Tm may be calculated as a linear regression of the preceding positions $A_{i,t-3}$, $A_{i,t-2}$, $A_{i,t-1}$, $A_{i,t}$. Variance is a one way of characterizing whether the mobile radio communication terminal's trajectory is being properly estimated. As an alternative, the variance may be replaced by the mean absolute deviation MAD.

Finally, a probability $P_{i,t}$ of knowing the mobile radio communication terminal's trajectory i at the moment $t$ may be defined as inversely proportionate to the variance $var_{i,t}$. This means that if the probability is greater than a probability threshold $P_s$, the trajectory and future position of the mobile radio communication terminal may be determined with a relatively low error. Conversely, whenever the variance of the previous positions is too great, the probability $P_{i,t}$ is less than the probability threshold $P_s$, and it is not possible to make reasonable conclusions about the trajectory and future position of the mobile radio communication terminal.

In a step S2, the service area $SA_t$ is adjusted as a function of the observation of the mobile radio communication terminal's movement parameters at the moment t. In particular, the service area groups together the cells in which the mobile radio communication terminal has the strongest future probability of being located. The shape of the service area may also be adjusted as a function of the result of comparing the probability $P_{i,t}$ with the threshold probability Ps. Consequently, the service area is not limited solely to the few cells adjacent to the cell in which the mobile radio communication terminal is located at a given moment. For example, the service area may have the shape of an ellipse defined by usual parameters such as its center, its focuses, and the respective lengths of the short and long axes. The definition of the ellipse shall be described in greater detail later on in relationship with Figure 3.

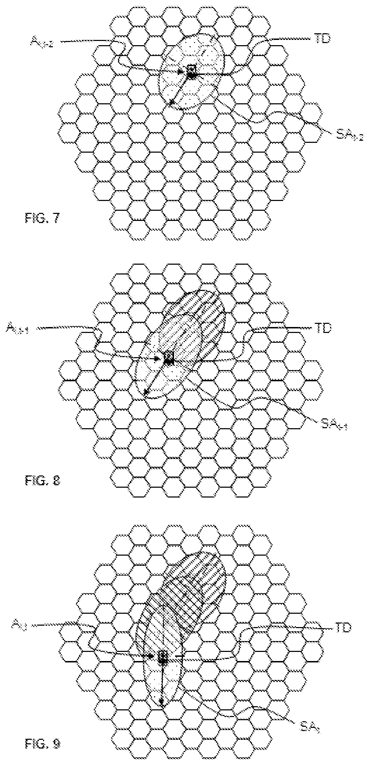

Furthermore, the service area is dynamically adapted to the speed of the mobile radio communication terminal. Figures 7 to 9 schematically depicts the dynamic adjustment of the service area $SA_{t-2}$, $SA_{t-1}$, $SA_t$ over time for a mobile radio communication terminal TD whose current position $A_{i,t-2}$, $A_{i,t-1}$, $A_{i,t}$ and movement parameters change over time.

In a step S3, a set number N of service cells $\{SC\}^N_{i=1}$ is identified as belonging to the service area $SA_t$. The service cells are the cells in which the mobile radio communication terminal might most likely be located at a later moment $t+\Delta t$. Whenever the service area has an elliptical shape, the identification of the service cells is based on the parameters defining the service area, i.e. the position of the center, the position of the focuses, the length of the short axis, and the length of the long axis. Within the context of a fourth-generation LTE telecommunication network, these parameters may, for example, the exchange between the cells' various base stations by means of signaling messages on the X2 interface. Within the context of a 3rd-generation telecommunication network managed in a centralized fashion, these parameters may, for example, be exchanged between the cells' various base stations by means of the network controller RNC. Within the context of a 3rd-generation telecommunication network managed in a distributed fashion, these parameters may, for example, be exchanged between the cells' various base stations by means of the signaling messages.

In a step S4, undelivered data is preloaded into the base stations of the identified service cells $\{SC\}^N_{i=1}$. This step is a predictive step in which the service cells $\{SC\}^N_{i=1}$ as identified during step S3 receives the data packets not yet delivered to the mobile radio communication terminal. These data packets may be stored in a cache memory of the base station respectively serving each service cell $\{SC\}^N_{i=1}$. Within the context of a 4th-generation LTE telecommunication network, the MME/SGW gateway may pre-deliver the video data to the identified service cells' base stations. Within the context of a 3rd-generation telecommunication network managed in a centralized fashion, the network controller RNC may pre-deliver the video data to the identified service cells' base stations. Within the context of a 3rd-generation telecommunication network managed in a distributed fashion, the base station that serves the current service cell (in which the mobile radio communication terminal is located) sends the not-yet-delivered data packets to the mobile radio communication terminal. Whenever the mobile radio communication terminal leaves the current service cell, the base stations serving that cell may additionally inform the base stations of the identified service cells of the number of the last packet or segment transmitted to the mobile radio communication terminal.

In a step S5, at a later moment $t+\Delta t$, the mobile radio communication terminal has moved and is located in another service cell $\{SC\}_K$ belonging to the group of identified service cells $\{SC\}^N_{i=1}$ in which it receives the following data packets stored in cache memory. There is no data packet transmission time when the mobile radio communication terminal moves from the previous cell to the new current cell, because the data packets are already in the new current cell's cache memory. The data packets can start being transmitted to the mobile radio communication terminal once the handover is complete. From the standpoint of the mobile radio communication terminal, this terminal has a buffer memory that save, for example, on the order of 2 to 3 seconds of the video data, and a video decoder capable of detecting any duplicates in the event that identical packets or segments are received when moving from one cell to another.

In a step S6, the pre-loaded data can be deleted from the cache memory of the service cells $\{SC\}^N_{i=1}$ after a predefined time period $\Delta T_{DEL}$ has elapsed. This makes it possible to free up resources within the cells which are not necessarily affected by the current telecommunication session.

Figure 3 depicts a service area $SA_t$ in the form of an ellipse. An ellipse is the location of the points in which the sum of the distances r1 et r2 at two fixed points distinct from the plane known as focuses F1 and F2 separated by distance 2c, is constant. This constant corresponds to the length of a segment MN, known as the long axis. The segment PQ, known as the short axis, has the length 2b. The long axis MN and the short axis PQ cross perpendicularly within their environments. The set of points X of the ellipse's plane fulfills the formula:

$$d(X, F1)+d(X,F2)=2a,$$

d being the distance from the point X to one of its focuses; and

$$2a = 2\sqrt{c^2 + b^2} \quad a \in \mathbb{R}^*_+, \quad b \in \mathbb{R}^*_+.$$

The ellipse may be defined in such a way that a current position of the mobile radio communication terminal corresponds to the center of the ellipse, i.e. the point formed at the intersection C of the long axis MN and the short axis PQ. The direction of the long axis may be roughly parallel to the current direction (defined by the direction vector $A_{i,t-1}A_{i,t}$) of the mobile radio communication terminal's trajectory.

The ellipse's other parameters, i.e. the lengths of the long axis 2a and the short axis 2b, are determined and adjusted as a function of the ellipse's estimated trajectory, and potentially the change in the mobile radio communication terminal's trajectory as a function of time.

The length 2b of the short axis PQ is defined in relation to the estimate of the variance of the mobile radio communication terminal's trajectory. Whenever the direction of the mobile radio communication terminal's trajectory remains nearly unchanged, a low value is assigned to the length 2b of the short axis PQ, for example four times the radius of one cell. Whenever the direction of the mobile radio communication terminal's trajectory varies significantly, a high value is assigned to the length 2b of the short axis PQ, for example eight times the radius of one cell.

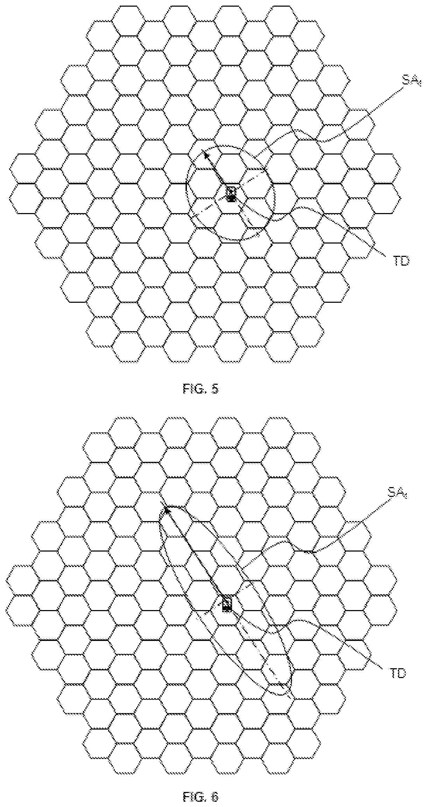

The length 2a of the long axis MN is defined in relation to the estimate of the mobile radio communication terminal's speed. Whenever the mobile radio communication terminal's speed is slow, a low value is assigned to the length 2a of the long axis MN, for example four times the radius of one cell. Figure 6 schematically depicts an example adjustment of a service area $SA_t$ in a mobile radio communication terminal moving at a fast speed. Whenever the mobile radio communication terminal's speed is slow, a low value is assigned to the length 2a of the long axis MN, for example four times the radius of one cell. Figure 5 schematically depicts an example adjustment of a service area $SA_t$ in a mobile radio communication terminal moving at a slow speed.

Furthermore, whenever the probability $P_{i,t}$ of knowing the mobile radio communication terminal's trajectory i at the moment $t$ is greater than the probability threshold $_s$, the service area may be bounded as the half of the ellipse corresponding to the direction of the mobile radio communication terminal's movement instead of the entire ellipse. Such a situation is depicted by way of example in Figure 10. Whenever the probability $P_{i,t}$ of knowing the mobile radio communication terminal's trajectory i at the moment $t$ is less than the probability threshold $P_s$, the service area is bounded as the fully ellipse. This makes it possible to prepare for a reversal in the direction in which the mobile radio communication terminal is moving. Such a situation is depicted by way of example in Figures 7 to 9. By way of example, the probability threshold $P_s$ may be chosen as equal to 0.8.

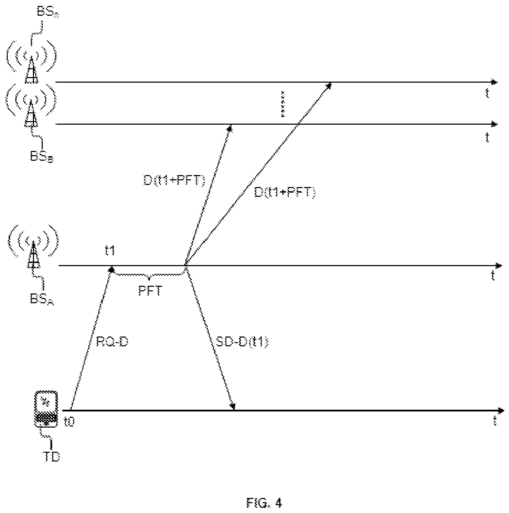

Figure 4 is a temporal diagram illustrating the transmission of data between various base stations $BS_A$, $BS_B$,..., $BS_n$ of cells forming part of the service area and to a mobile radio communication terminal TD. This temporal diagram may be applicable to an LTE network.

At a moment $t_0$, a mobile radio communication terminal TD requests RQ-D a data transmission service, for example a streaming video service. The request is transmitted at the moment $t_0$ and then received at the moment $t_1$ by the base station $BS_A$ of the cell in which the mobile radio communication terminal is located TD at the moment to. A corresponding telecommunications session is opened. For a duration PFT, the base station $BS_A$ executes the method of dynamically adjusting the service area depicted in Figure 2, and in particular identifies the base stations $BS_B$,..., $BS_n$ of the cells forming part of the service area.

At a later moment $t_1$+PFT corresponding to the pre-loading duration PFT having elapsed since the service request was received at the moment $t_1$, the base station $BS_A$ begins sending data SD-D to the mobile radio communication terminal TD. Roughly simultaneously, the streaming data $D(t_1$+PFT) not yet transmitted, meaning the one beginning from the last packet or segment transmitted to the mobile radio communication terminal TD, is also distributed by the base station $BS_A$ to all the other base stations $BS_B$,..., $BS_n$ of the cells forming part of the determined service area.

This way, when the mobile radio communication terminal TD switches to a new cell, the communication session's handover process can take place without obstacles. There is no discontinuity in the streaming data, because this stream is already preloaded within the new cell's base station.

The Figures and their descriptions given above illustrate the invention rather than limiting it. In particular, the invention has been described with respect to a particular example application to streaming video transfers. Nonetheless, it is obvious for a person skilled in the art that the invention may be extended to other applications, and generally speaking to all applications requiring streaming data transfers for users of mobile radio communication terminals moving between cells and requiring a telecommunication session handover process. Additionally, the ellipse shape is not limiting; other shapes that can be used to define an optimized service area may be suitable, such as a diamond. Furthermore, although the drawings, for simplicity's sake, show sells of identical sizes, the cellular mobile telecommunications network's radio coverage may comprise cells of different sizes.

Although some Figures showed different functional entities as being distinct blocks, this does not in any way exclude embodiments of the invention in which a single entity performs multiple functions, or multiple entities perform a single function. The functions of the various elements depicted in the Figures, particularly the functional blocks marked as being "processing modules" or "processors", may be constructed by using dedicated hardware, such as hardware capable of executing a computer program, in combination with an appropriate computer program. When the function is performed by a processor, it may be performed by a single dedicated processor, or by a single shared processor, or by a plurality of individual processors, some of which may be shared. Additionally, the use of the term "processing modules" or "processor" should not be interpreted as referring explicitly to hardware capable of executing a computer program, and may implicitly include, without being limited thereto, a digital signal processor (DSP), a network processor, an application-specific integrated circuit (ASIC), a programmable logical circuit such as a field-programmable gate array (FPGA), a read-only memory (ROM) for storing the computer program, a random access memory (RAM), and a non-volatile storage memory. Other hardware, conventional or specific, may also be included. Thus, by way of example, the radio resource management device may be, according to one embodiment of the invention, a base station, or according to another embodiment of the invention, a network controller RNC (3G third-generation cellular radio communication network), or according to yet another embodiment, a MME/SGW gateway (fourth-generation cellular radio communication network, such as LTE or WiMax), or according to yet another embodiment, any other node of the cellular radio communication network capable of managing the radio resources. Consequently, the Figures must be considered a very schematic illustration of the invention.

The reference signs in the claims are not limiting in any way. The verb "comprise" does not exclude the presence of other elements besides those listed in the claims. The word "one" before and element does not exclude the presence of a plurality of such elements.

## Claims

1. A method for managing radio resources in a cellular radio communication network infrastructure comprising a plurality of base stations serving cells, at least some of the base stations being capable of transmitting streaming data to mobile radio communication terminals on sets of cells, known as service areas, which method comprises the following steps, in relation to a mobile radio communication terminal to which the streaming data are transmitted by the base station(s) serving the service area (SAt) in whose coverage the terminal is located:

- estimating (S1) a mobile radio communication terminal's (TD) movement parameter,
- adjusting (S2) the service area (SAt) as a function of the estimate of the mobile radio communication terminal's (TD) movement parameter,
- identifying (S3) cells ({SC}<N>i=1) of the service area (SAt) in which the mobile radio communication terminal (TD) might most likely be located,
- sending, by a base station (BSA), serving the identified cells ({SC}<N>i=1) streaming data (SD-D) to the mobile radio communication terminal (TD),
- distributing (S4), by the base station (BSA), a data packet or segment of the streaming data (D(t1+PFT)) not yet transmitted to the mobile radio communication terminal (TD), to other base stations (BSB, ..., BSN) serving the identified cells ({SC}<N>i=1), further comprising a step of, whenever the mobile radio communication terminal (TD) leaves a current service cell, informing, by the base station (BSA) serving the current service cell, the other base stations (BSB, ..., BSN) serving the identified cells ({SC}<N>i=1) of the number of the last packet or segment transmitted to the mobile radio communication terminal, and distributing, by the other base station (BSB, ... BSN) that is serving another service cell of the identified cells ({SC}<N>i=1) the mobile radio communication terminal (TD) is located in, the data packet or segment of the streaming data (D(t1+PFT)) beginning from the last packet or segment transmitted to the mobile radio communication terminal (TD).

**2.** The method according to claim 1, further comprising a step (S4) of, at the base stations (BSA, ..., BSN) serving the identified cells, storing, as preloaded data, a packet or segment of the streaming data received, and a step (S6) of deleting the preloaded data from at least some of the base stations serving the identified cells, after a predefined period of time.

**3.** The method according to any one of the preceding claims, wherein the step of estimating the mobile radio communication terminal's (TD) movement parameters comprises estimating a speed and direction of the mobile radio communication terminal's (TD) movement based on GPS satellite positioning or a measurement of the TDOA time difference of arrival, or a measurement of received power taken by a base station serving the cell in which the mobile radio communication terminal is located.

**4.** The method according to any one of the preceding claims, wherein the step of estimating the mobile radio communication terminal's (TD) movement parameters comprises estimating a variance (vari,t) of an estimate of a trajectory of the mobile radio communication terminal (TD), and adjusting the service area (SAt) as a function of said variance (vari,t).

**5.** The method according to the preceding claim, wherein the step of estimating the estimating the mobile radio communication terminal's (TD) movement parameters comprises determining a probability (Pi,t) of knowing the mobile radio communication terminal's (TD) trajectory, defined as being inversely proportionate to the variance (vari,t), and comparing it to a probability threshold (Ps), with the service area (SAt) being reduced if the probability (Pi,t) is greater than the probability threshold (Ps).

**6.** The method according to any one of the preceding claims, wherein the service area (SAt) corresponds to a radio coverage having substantially the shape of an ellipse.

**7.** The method according to the preceding claim, wherein an ellipse center (C) defined by the intersection of a long axis (MN) and a short axis (PQ) of the ellipse corresponds to the position of the mobile radio communication terminal (TD).

**8.** The method according to claim 6 or 7, wherein the length of the ellipse's long axis (MN) and short axis (PQ) are dynamically adapted to, respectively, the speed and variance (vari,t) of the estimate of the mobile radio communication terminal's (TD) trajectory.

**9.** A computer program product intended to be loaded in the memory of a radio resource management device of a cellular radio communication network infrastructure, the computer program product comprising portions of software code implementing the radio resource management method in a cellular radio communication network infrastructure according to one of the claims 1 to 8 whenever the program is executed by a processing module of the radio resource management device.

**10.** A radio resource management device for a cellular radio communication network infrastructure, said infrastructure comprising a plurality of base stations serving cells, at least some of the base stations being capable of transmitting streaming data to mobile radio communication terminals in sets of cells, known as service areas, the device comprising a processing module for implementing the following steps, in relation to a mobile radio communication terminal to which the streaming data are transmitted by the base station(s) serving the service area (SAt) in whose coverage the terminal is located:

    - estimating (S1) a movement parameter of the mobile radio communication terminal (TD),
    - adjusting (S2) the service area (SAt) as a function of the estimate of the movement parameter of the mobile radio communication terminal (TD),
    - identifying (S3) cells ({SC}<N>i=1) of the service area (SAt) in which the mobile radio communication terminal (TD) might most likely be located, and
    - sending, by a base station (BSA), serving the identified cells ({SC}<N>i=1) data (SD-D) to the mobile radio communication terminal (TD)
    - distributing by the base station (BSA), a data packet or segment of the streaming data (D(t1+PFT)) not yet transmitted to the radio communication terminal, to other base stations (BSB, ..., BSN) serving the identified cells ({SC}<N>i=1), and to implement the step of whenever the mobile radio communication terminal (TD) leaves a current service cell, informing, by the base station (BSA) serving the current service cell, the other base stations (BSB, ..., BSN) serving the identified cells ({SC}<N>i=1) of the number of the last packet or segment transmitted to the mobile radio communication terminal, and distributing, by the other base station (BSB, ... BSN) that is serving another service cell of the identified cells ({SC}<N>i=1) the mobile radio communication terminal (TD) is located in, the data packet or segment of the streaming data (D(t1+PFT)) beginning from the last packet or segment transmitted to the mobile radio communication terminal (TD).

**11.** A base station (BS) comprising a radio resource management device according to claim 10.

12. A network controller RNC for a 3G third-generation cellular radio communication network comprising a radio resource management device according to claim 10.

13. A MME/SGW gateway for a fourth-generation LTE or WiMax cellular radio communication network infrastructure, comprising a radio resource management device according to claim 10.

**Patentansprüche**

1. Verfahren zum Verwalten von Funkressourcen in einer zellulären Funkkommunikationsnetzwerk-Infrastruktur, umfassend eine Vielzahl von Zellen bedienenden Basisstationen, wobei mindestens einige der Basisstationen fähig sind, Streaming-Daten auf mobile Funkkommunikationsendgeräte über Sätze von Zellen zu übertragen, die als Servicebereiche bekannt sind, wobei das Verfahren die folgenden Schritte umfasst in Bezug auf ein mobiles Funkkommunikationsendgerät, auf das die Streaming-Daten von der Basisstation (den Basisstationen) übertragen werden, die den Servicebereich (SAt) bedienen, in dessen Abdeckung sich das Endgerät befindet:

    - Schätzen (S1) eines Bewegungsparameters eines mobilen Funkkommunikationsendgeräts (TD),
    - Einstellen (S2) des Servicebereichs (SAt) als Funktion des geschätzten Bewegungsparameters des mobilen Funkkommunikationsendgeräts (TD),
    - Identifizieren (S3) von Zellen ({SC}<N>i=1) des Servicebereichs (SAt), in denen sich das mobile Funkkommunikationsendgerät (TD) am wahrscheinlichsten befindet,
    - Senden, durch eine Basisstation (BSA), welche die identifizierten Zellen ({SC}<N>i=1) bedient, von Streaming-Daten (SD-D) zum mobilen Funkkommunikationsendgerät (TD),
    - Verteilen (S4), durch die Basisstation (BSA), eines Datenpakets oder -segments der Streaming-Daten (D(t1+PFT)), das noch nicht auf das mobile Funkkommunikationsendgerät (TD) übertragen worden ist, auf andere Basisstationen (BSB, ..., BSN), welche die identifizierten Zellen ({SC}<N>i=1) bedienen, weiterhin umfassend einen Schritt, immer wenn das mobile Funkkommunikationsendgerät (TD) eine momentane Service-Zelle verlässt, des Informierens, durch die Basisstation (BSA), die der momentanen Service-Zelle dient, der anderen Basisstationen (BSB, ..., BSN), welche die identifizierten Zellen ({SC}<N>i=1) bedienen, über die Nummer des letzten Pakets oder Segments, das auf das mobile Funkkommunikationsendgerät übertragen worden ist, und Verteilen durch die andere Basisstation (BSB, ... BSN), die eine andere Service-Zelle der identifizierten Zellen ({SC}<N>i=1) bedient, in der sich das mobile Funkkommunikationsendgerät (TD) befindet, des Datenpakets oder -segments der Streaming-Daten (D(t1+PFT)), beginnend ab dem letzten Paket oder Segment, das auf das mobile Funkkommunikationsendgerät (TD) übertragen worden ist.

2. Verfahren nach Anspruch 1, weiterhin umfassend einen Schritt (S4), an den Basisstationen (BSA, ..., BSN), welche die identifizierten Zellen bedienen, des Speicherns, als zuvor geladene Daten, eines Pakets oder Segments der empfangenen Streaming-Daten, und einen Schritt (S6) des Löschens der zuvor geladenen Daten von den mindestens einigen Basisstationen, welche die identifizierten Zellen bedienen, nach einem vordefinierten Zeitraum.

3. Verfahren nach einem beliebigen der vorhergehenden Ansprüche, wobei der Schritt des Schätzens der Bewegungsparameter des mobilen Funkkommunikationsendgeräts (TD) umfasst das Schätzen einer Geschwindigkeit und Richtung der Bewegung des mobilen Funkkommunikationsendgeräts (TD) auf Grundlage der GPS-Satellitenortung oder einer Messung der TDOA-Zeitdifferenz der Ankunft oder einer Messung der empfangenen Leistung, die von einer Basisstation durchgeführt wird, die die Zelle bedient, in der sich das mobile Funkkommunikationsendgerät befindet.

4. Verfahren nach einem beliebigen der vorhergehenden Ansprüche, wobei der Schritt des Schätzens der Bewegungsparameter des mobilen Funkkommunikationsendgeräts (TD) umfasst das Schätzen einer Varianz (vari,t) einer Schätzung einer Trajektorie des mobilen Funkkommunikationsendgeräts (TD), und Einstellen des Servicebereichs (SAt) als Funktion besagter Varianz (vari,t).

5. Verfahren nach dem vorhergehenden Anspruch, wobei der Schritt des Schätzens der Schätzung der Bewegungsparameter des mobilen Funkkommunikationsendgeräts (TD) umfasst das Bestimmen einer Wahrscheinlichkeit (Pi,t), die Trajektorie des mobilen Funkkommunikationsendgeräts (TD) zu kennen, definiert als umgekehrt proportional zur Varianz (vari,t), und Vergleichen dieser mit einem Wahrscheinlichkeitsschwellenwert (Ps), wobei der Servicebereich (SAt) reduziert wird, wenn die Wahrscheinlichkeit (Pi,t) größer ist als der Wahrscheinlichkeitsschwellenwert (Ps).

**6.** Verfahren nach einem beliebigen der vorhergehenden Ansprüche, wobei der Servicebereich (SAt) einer Funkabdeckung entspricht, die im Wesentlichen die Form einer Ellipse hat.

**7.** Verfahren nach dem vorhergehenden Anspruch, wobei ein Ellipsenzentrum (C), das definiert wird durch den Kreuzungspunkt einer langen Achse (MN) und einer kurzen Achse (PQ) der Ellipse, der Position des mobilen Funkkommunikationsendgeräts (TD) entspricht.

**8.** Verfahren nach Anspruch 6 oder 7, wobei die Länge der langen Achse (MN) und der kurzen Achse (PQ) der Ellipse dynamisch angepasst sind jeweils an die Geschwindigkeit und die Varianz (vari,t) der Schätzung der Trajektorie des mobilen Funkkommunikationsendgeräts (TD).

**9.** Computerprogrammprodukt, bestimmt für das Laden im Speicher einer Funkressourcenverwaltungsvorrichtung einer zellulären Funkkommunikationsnetzwerkinfrastruktur, wobei das Computerprogrammprodukt Teile von Softwarecode umfasst, den das Funkressourcenverwaltungsverfahren in einer zellulären Funkkommunikationsnetzwerkinfrastruktur implementiert nach einem der Ansprüche 1 bis 8, immer wenn das Programm ausgeführt wird von einem Verarbeitungsmodul der Funkressourcenverwaltungsvorrichtung.

**10.** Funkressourcenverwaltungsvorrichtung für eine zelluläre Funkkommunikationsnetzwerk-Infrastruktur, wobei besagte Infrastruktur eine Vielzahl von Zellen bedienende Basisstationen umfasst, wobei mindestens einige der Basisstationen fähig sind, Streaming-Daten auf mobile Funkkommunikationsendgeräte auf Sätze von Zellen zu übertragen, die als Servicebereiche bekannt sind, wobei die Vorrichtung ein Verarbeitungsmodul umfasst für die Implementierung der folgenden Schritte in Bezug auf ein mobiles Funkkommunikationsendgerät, auf das die Streaming-Daten von der Basisstation (den Basisstationen) übertragen werden, die den Servicebereich (SAt) bedienen, in dessen Abdeckung sich das Endgerät befindet:

  - Schätzen (S1) eines Bewegungsparameters des mobilen Funkkommunikationsendgeräts (TD),
  - Einstellen (S2) des Servicebereichs (SAt) als Funktion des Schätzens des Bewegungsparameters des mobilen Funkkommunikationsendgeräts (TD),
  - Identifizieren (S3) von Zellen ({SC}<N>i=1) des Servicebereichs (SAt), in denen sich das mobile Funkkommunikationsendgerät (TD) am wahrscheinlichsten befindet, und

  - Senden, durch eine Basisstation (BSA), welche die identifizierten Zellen ({SC}<N>i=1) bedient, von Daten (SD-D) zum mobilen Funkkommunikationsendgerät (TD),
  - Verteilen durch die Basisstation (BSA) eines Datenpakets oder -segments der Streaming-Daten (D(t1+PFT)), das noch nicht auf das Funkkommunikationsendgerät übertragen worden ist, auf andere Basisstationen (BSB, ..., BSN), welche die identifizierten Zellen ({SC}<N>i=1) bedienen, und Implementieren des Schritts, immer wenn das mobile Funkkommunikationsendgerät (TD) eine momentane Service-Zelle verlässt, des Informierens, durch die Basisstation (BSA), die der momentanen Service-Zelle dient, der anderen Basisstationen (BSB, ..., BSN), welche die identifizierten Zellen ({SC}<N>i=1) bedienen, über die Nummer des letzten Pakets oder Segments, das auf das mobile Funkkommunikationsendgerät übertragen worden ist, und Verteilen durch die andere Basisstation (BSB, ... BSN), die eine andere Service-Zelle der identifizierten Zellen ({SC}<N>i=1) bedient, in der sich das mobile Funkkommunikationsendgerät (TD) befindet, des Datenpakets oder -segments der Streaming-Daten (D(t1+PFT)), beginnend ab dem letzten Paket oder Segment, das auf das mobile Funkkommunikationsendgerät (TD) übertragen worden ist.

**11.** Basisstation (BS), umfassend eine Funkressourcenverwaltungsvorrichtung nach Anspruch 10.

**12.** Netzwerk-Controller RNC für ein zelluläres Funkkommunikationsnetzwerk dritter Generation (3G), umfassend eine Funkressourcenverwaltungsvorrichtung nach Anspruch 10.

**13.** MME-/ SGW-Gateway für eine zelluläre Funkkommunikationsnetzwerkinfrastruktur vierter Generation (LTE oder WiMax), umfassend eine Funkressourcenverwaltungsvorrichtung nach Anspruch 10.

**Revendications**

**1.** Procédé de gestion de ressources radio dans une infrastructure de réseau de radiocommunication cellulaire comprenant une pluralité de stations de base desservant des cellules, au moins certaines des stations de base pouvant transmettre des données de transmission en continu à des terminaux de radiocommunication mobile sur des ensembles de cellules, appelés zones de service, ledit procédé comprenant les étapes suivantes, par rapport à un terminal de radiocommunication mobile auquel les données de transmission en continu sont transmises par la/les station(s) de base desservant la zone de service (SAt) dans la couverture de laquelle le terminal est situé :

- estimer (S1) un paramètre de mouvement du terminal de radiocommunication mobile (TD),
- ajuster (S2) la zone de service (SAt) en fonction de l'estimation du paramètre de mouvement du terminal de radiocommunication mobile (TD),
- identifier (S3) des cellules ({SC}<N>i=1) de la zone de service (SAt) dans laquelle le terminal de radiocommunication mobile (TD) est le plus susceptible d'être situé,
- envoyer, au moyen d'une station de base (BSA), desservant les cellules identifiées ({SC}<N>i=1) des données de transmission en continu (SD-D) au terminal de radiocommunication mobile (TD),
- distribuer (S4), au moyen de la station de base (BSA), un paquet de données ou un segment des données de transmission en continu (D(t1+PFT)) pas encore transmis au terminal de radiocommunication mobile (TD), vers d'autres stations de base (BSB, ..., BSN) desservant les cellules identifiées ({SC}<N>i=1), comprenant en outre une étape, à chaque fois que le terminal de radiocommunication mobile (TD) laisse une cellule de service actuelle, consistant à informer, au moyen de la station de base (BSA) desservant la cellule de service actuelle, les autres stations de base (BSB, ..., BSN) desservant les cellules identifiées ({SC}<N>i=1) du nombre du dernier paquet ou segment transmis au terminal de radiocommunication mobile, et à distribuer, au moyen de l'autre station de base (BSB, ... BSN) qui dessert une autre cellule de service des cellules identifiées ({SC}<N>i=1) dans laquelle le terminal de radiocommunication mobile (TD) est situé, le paquet de données ou le segment des données de transmission en continu (D(t1+PFT)) en commençant par le dernier paquet ou segment transmis au terminal de radiocommunication mobile (TD).

2. Procédé selon la revendication 1, comprenant en outre une étape (S4), au niveau des stations de base (BSA, ..., BSN) desservant les cellules identifiées, de stockage, en tant que données préchargées, d'un paquet ou segment des données de transmission en continu reçues, et une étape (S6) de suppression des données préchargées à partir d'au moins certaines des stations de base desservant les cellules identifiées, après une période prédéfinie.

3. Procédé selon l'une quelconque des revendications précédentes, dans lequel l'étape d'estimation des paramètres de mouvement du terminal de radiocommunication mobile (TD) comprend l'estimation d'une vitesse et d'une direction du mouvement du terminal de radiocommunication mobile (TD) sur la base d'un positionnement par satellite GPS ou d'une mesure de la différence de temps d'arrivée TDOA, ou d'une mesure d'une puissance reçue prise par une station de base desservant la cellule dans laquelle le terminal de radiocommunication mobile est situé.

4. Procédé selon l'une quelconque des revendications précédentes, dans lequel l'étape d'estimation des paramètres de mouvement du terminal de radiocommunication mobile (TD) comprend l'estimation d'une variance (vari,t) d'une estimation d'une trajectoire du terminal de radiocommunication mobile (TD), et l'ajustement de la zone de service (SAt) en fonction de ladite variance (vari,t).

5. Procédé selon la revendication précédente, dans lequel l'étape d'estimation de l'estimation des paramètres de mouvement du terminal de radiocommunication mobile (TD) comprend la détermination d'une probabilité (Pi,t) de connaissance de la trajectoire du terminal de radiocommunication mobile (TD), définie comme étant inversement proportionnelle à la variance (vari,t), et sa comparaison avec un seuil de probabilité (Ps), la zone de service (SAt) étant réduite si la probabilité (Pi,t) est supérieure au seuil de probabilité (Ps).

6. Procédé selon l'une quelconque des revendications précédentes, dans lequel la zone de service (SAt) correspond à une couverture radio ayant sensiblement la forme d'une ellipse.

7. Procédé selon la revendication précédente, dans lequel un centre de l'ellipse (C) défini par l'intersection d'un axe long (MN) et un axe court (PQ) de l'ellipse correspond à la position du terminal de radiocommunication mobile (TD).

8. Procédé selon la revendication 6 ou 7, dans lequel la longueur de l'axe long (MN) et de l'axe court (PQ) de l'ellipse est adapté dynamiquement, respectivement, à la vitesse et à la variance (vari,t) de l'estimation de la trajectoire du terminal de radiocommunication mobile (TD).

9. Produit de programme informatique destiné à être chargé dans la mémoire d'un dispositif de gestion de ressources radio d'une infrastructure de réseau de radiocommunication cellulaire, le produit de programme informatique comprenant des parties d'un code logiciel mettant en oeuvre le procédé de gestion de ressources radio dans une infrastructure de réseau de radiocommunication cellulaire conformément à une des revendications 1 à 8 à chaque fois que le programme est exécuté par un module de traitement du dispositif de gestion de ressources radio.

**10.** Dispositif de gestion de ressources radio pour une infrastructure de réseau de radiocommunication cellulaire, ladite infrastructure comprenant une pluralité de stations de base desservant des cellules, au moins certaines des stations de base pouvant transmettre des données de transmission en continu à des terminaux de radiocommunication mobile dans des ensembles de cellules, appelés zones de service, le dispositif comprenant un module de traitement pour mettre en oeuvre les étapes suivantes, par rapport à un terminal de radiocommunication mobile auquel les données de transmission en continu sont transmises par la/les station(s) de base desservant la zone de service (SAt) dans la couverture de laquelle le terminal est situé :

- estimer (S1) un paramètre de mouvement du terminal de radiocommunication mobile (TD),
- ajuster (S2) la zone de service (SAt) en fonction de l'estimation du paramètre de mouvement du terminal de radiocommunication mobile (TD),
- identifier (S3) des cellules ({SC}<N>i=1) de la zone de service (SAt) dans laquelle le terminal de radiocommunication mobile (TD) est le plus susceptible d'être situé, et
- envoyer, au moyen d'une station de base (BSA), desservant les cellules identifiées ({SC}<N>i=1) des données (SD-D) au terminal de radiocommunication mobile (TD)
- distribuer au moyen de la station de base (BSA), un paquet de données ou un segment des données de transmission en continu (D(t1+PFT)) pas encore transmis au terminal de radiocommunication, vers d'autres stations de base (BSB, ..., BSN) desservant les cellules identifiées ({SC}<N>i=1), et pour mettre en oeuvre l'étape consistant, à chaque fois que le terminal de radiocommunication mobile (TD) laisse une cellule de service actuelle, à informer, au moyen de la station de base (BSA) desservant la cellule de service actuelle, les autres stations de base (BSB, ..., BSN) desservant les cellules identifiées ({SC}<N>i=1) du nombre du dernier paquet ou segment transmis au terminal de radiocommunication mobile, et à distribuer, au moyen de l'autre station de base (BSB, ... BSN) qui dessert une autre cellule de service des cellules identifiées ({SC}<N>i=1) dans laquelle le terminal de radiocommunication mobile (TD) est situé, le paquet de données ou le segment des données de transmission en continu (D(t1+PFT)) en commençant par le dernier paquet ou segment transmis au terminal de radiocommunication mobile (TD).

**11.** Station de base (BS) comprenant un dispositif de gestion de ressources radio selon la revendication 10.

**12.** Contrôleur de réseau RNC pour un réseau de radiocommunication cellulaire de troisième génération 3G comprenant un dispositif de gestion de ressources radio selon la revendication 10.

**13.** Passerelle MME/SGW pour une infrastructure de réseau de radiocommunication cellulaire LTE ou Wi-Max de quatrième génération, comprenant un dispositif de gestion de ressources radio selon la revendication 10.

FIG. 1

FIG. 3

EP 2 437 549 B1

FIG. 2

14

FIG. 4

FIG. 5

FIG. 6

FIG. 7

FIG. 8

FIG. 9

FIG. 10

**EP 2 437 549 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004062122 A

**Non-patent literature cited in the description**

- **S. OMAR ; C. RIZOS.** Incorporating GPS into Wireless Networks: Issues and Challenges. *The 6th International Symposium on Satellite Navigation Technology Including Mobile Positioning & Location Services,* 2003
- **FREDRIK GUSTAFSSON ; FREDRIK GUNNARSSON.** Positioning using time-difference of arrival measurements. *IEEE International Conference on Acoustics, Speech, and Signal Processing,* 2003

- **SALAH-EDDINE ELAYOUBI ; AFEF BEN HADJ ; ALAYA-FEKI ; EMMANUELLE VILLEBRUN ; BENOÎT FOURESTIÉ.** Wavelet analysis for velocity characterization in mobile networks. *VTC Spring,* 2006, 793-797